# EUROPÄISCHE PATENTSCHRIFT

(11) **EP 0 519 111 B1**
(45) Veröffentlichungstag und Bekanntmachung des Hinweises auf die Patenterteilung: **02.05.1997**
(21) Anmeldenummer: 91110247.3
(22) Anmeldetag: 21.06.1991
(51) Int. Cl.: H04B 1/20, B60R 16/02

(54) **Verfahren zur gemeinsamen Übertragung von digitalen Audio- und Steuerdaten auf einer gemeinsamen Busleitung, Bussystem zur Durchführung des Verfahrens und Schnittstelle zum Einsatz bei dem Verfahren**
Method and system for transmission of digital audio and control data on a common bus, and interface used for the system
Procédé et système pour transmission de données numériques audio et de commande dans un bus commun, et interface utilisé dans ce procédé

(43) Veröffentlichungstag der Anmeldung: 23.12.1992
(73) Patentinhaber: BECKER GmbH, D-76307 Karlsbad (DE)
(72) Erfinder: Hetzel, Herbert, W-7500 Karlsruhe (DE); Mauderer, Hans Peter, W-7502 Malsch (DE); Heck, Patrik, W-7552 Durmersheim (DE)
(74) Vertreter: Degwert, Hartmut, Dipl.-Phys.

(56) Entgegenhaltungen:
- EP-A- 0 176 788
- EP-A- 0 202 602
- DE-A- 3 928 239
- FUJITSU-SCIENTIFIC AND TECHNICAL JOURNAL Bd. 18, Nr. 2, Juni 1982, KAWASAKI,JP Seiten 141 - 157; KUGA AT AL: 'Optical Loop Data Highway for Subway Power Control System'

## Beschreibung

Die Erfindung betrifft ein Verfahren zur gemeinsamen Übertragung von digitalen Audio- und Steuerdaten auf einer gemeinsamen Busleitung in einem System von Geräten, zu denen wenigstens eine digitale Audio-Signalquelle und wenigstens eine digitale Steuerdaten-Signalquelle gehören.

Ferner betrifft die Erfindung ein Bussystem mit einer Busleitung in einem System von Geräten, zu denen wenigstens eine digitale Audio-Signalquelle und wenigstens eine digitale Steuerdaten-Signalquelle gehören, zur gemeinsamen Übertragung von digitalen Audio- und Steuerdaten auf dieser Busleitung. Schließlich betrifft die Erfindung eine Schnittstelle zur Verwendung in dem Bussystem.

Ein Verfahren der eingangs angegebenen Art ist bereits aus der DE 39 28 239 Al bekannt. Bei diesem Verfahren werden Aktiv-Lautsprecherboxen, die von einem digitalen Vorverstärker angesteuert werden, über Datenleitungen sowohl mit dem digitalen Tonsignal als auch mit Steuerdaten angesteuert, die im U-Bit-Kanal übertragen werden. Mittels dieser Steuerdaten können elementare Funktionen wie Einstellung von Lautstärke, Klangbild und Balance erfolgen.

Aus der EP 0 202 602 A2 ist auch bereits ein Bussystem bekannt, in dem eine zentrale Steuerung und mehrere gleiche Datenstationen, beispielsweise einer Klimaanlage, mittels Lichtleiterabschnitten zu einem geschlossenen Ring gekoppelt sind. Jeder Datenstation ist eine eigene Adresse zugewiesen. Die Daten werden in dem ringförmigen Bussystem asynchron blockweise übertragen. Die Übertragung von Audio-Signalen ist nicht vorgesehen.

In vielen Bereichen der Technik trifft man auf eine örtliche Ansammlung ganz verschiedenartiger elektrischer und elektronischer Geräte, die untereinander Informationen austauschen sollen und infolgedessen in teilweise komplizierter Weise miteinander vernetzt sind. Beispielsweise sind in Kraftfahrzeugen Audio-Signalquellen wie Radioempfänger, Kassettenrekorder oder CD-Spieler einerseits miteinander, andererseits mit Audiosenken wie Verstärker-Lautsprecher-Kombinationen verbunden. Es kann sinnvoll sein, auch bisher separate Audiogeräte wie beispielsweise Autotelefone in ein derartiges System mit einzubeziehen. Ferner geht der Trend zu einer immer umfangreicheren Steuerung und Überwachung von Fahrzeugfunktionen. Von den zahllosen Möglichkeiten seien hier nur beispielhaft die Überwachung der Funktion von Außenleuchten oder des Reifenluftdrucks oder die Messung oder die Steuerung der Motordrehzahl oder des Ladedrucks eines Turboladers aufgeführt.

Hierzu sind umfangreiche Leitungsverbindungen zwischen den einzelnen Komponenten erforderlich. Auch wenn, wie angestrebt, viele Geräte und Funktionen durch einen Bordcomputer gesteuert und verwaltet werden, bleibt das Problem einer großen Anzahl und Länge von Leitungen bestehen. Von Nachteil ist auch der Umstand, daß viele bekannte Komponenten nicht direkt miteinander kommunizieren können. Um beispielsweise bei fallendem Reifenluftdruck das Audiosystem dazu zu veranlassen, einen gespeicherten Text als Warnung über die Lautsprecher abzugeben, mußte bisher ein nicht mehr zu vertretender Aufwand betrieben werden. Zahlreiche weitere Beispiele für die Vernetzung von Fahrzeugkomponenten sind bereits angegeben worden, wurden aber bisher allenfalls in Teilbereichen realisiert, so eine standardisierte Übertragung von Audiodaten einerseits bzw. Steuerdaten andererseits, und zwar jeweils über ein separates Netzwerk abgeschirmter elektrischer Kabel. Der wünschenswerten Verwendung eines Bussystems stehen große Schwierigkeiten im Hinblick auf die erforderliche Busarbitrierung und die dadurch entstehenden Zeitverluste entgegen. Da Geräte unterschiedlichster Art als Teilnehmer an die gemeinsame Busleitung angeschlossen werden müßten und ein hoher Datendurchsatz auf dieser erfolgen muß, um beispielsweise digitale Audio-Daten zweikanalig und zusätzlich zu Steuer- und Meßdaten zu übertragen, sind Übertragungskonflikte kaum zu vermeiden.

Die der Erfindung zugrundeliegende Aufgabe besteht darin, ein universelles System zum Austausch von Audio- und Steuerdaten zwischen verschiedensten elektrischen und elektronischen Geräten über ein störungssicheres, kostengünstig zu verwirklichendes und äußerst leistungsfähiges Bussystem zu ermöglichen.

Diese Aufgabe wird, was das Verfahren betrifft, erfindungsgemäß durch die Merkmale des Patentanspruchs 1 gelöst. Die erfindungsgemäßen Merkmale eines zur Durchführung des Verfahrens geeigneten Bussystems sowie einer dazugehörigen Geräteschnittstelle sind in den Patentansprüchen 9 und 12 angegeben.

Die erfindungsgemäße Lösung bringt zahlreiche Vorteile mit sich. Indem sämtliche miteinander zu verbindenden Geräte über eine einzige Busleitung in Reihe geschaltet sind, kann Leitungsweg eingespart werden und die Zusammenschaltung einfacher erfolgen. Die Übertragung über Lichtwellenleiter bringt einerseits vollkommene Störungsfreiheit, andererseits eine erhebliche Gewichtsreduzierung und Materialeinsparung mit sich, was inbesondere beim Einsatz in Fahrzeugen mit ihren immer zahlreicheren elektrischen und elektronischen Komponenten von Bedeutung ist. Die digitale Übertragung stellt nur geringe Anforderungen an die Qualität des optischen Übertragungsmediums und der verwendeten elektro-optischen Wandler, so daß die Kosten dafür gering sind. Da die Übertragungsstrecken klein sind, können preiswerte Kunststofflichtwellenleiter zum Einsatz kommen. Da die Schnittstellen standardisiert sein können und für alle Teilnehmer derselbe Schnittstellen-Bausteintyp verwendet werden kann, ist auch der elektronische Teil preiswert realisierbar. Eine aufwendige Busarbitrierung entfällt, da jedes Gerät einen eigenen Sendekanal hat und auf jedem Lichtwellenleiter-Abschnitt Steuerdaten jeweils monodirektional übertragen werden. Die feste Kanalzuordnung ermöglicht eine optimale Ausnutzung der zur Verfügung stehenden Userkanalkapazität, da keinerlei Kapazität für eine Busarbitrierung vonnöten ist. Außerdem ermöglicht die feste Kanalzuordnung eine äußerst einfache Softwareanbindung der Geräte.

Da in dem Bussystem die Reihenschaltung der Geräte zu einem Ring geschlossen, kann der Empfang von Steuerdaten dadurch quittiert werden, daß ein bestimmtes Bit der Signalfolge verändert oder entfernt wird. Da die veränderte Signalfolge über das geschlossene Bussystem wieder zu der zu sendenden Schnittstelle zurückgelangt, erfährt diese unmittelbar, ob der ihr zugeordnete Steuerdatenkanal wieder frei ist.

Gemäß Patentanspruch 4 wird als Übertragungsformat die Norm AES3-1985 verwendet. Diese Norm wurde unter Beteiligung der European Bordcasting Union als international standarisiertes Protokoll zur digitalen Audioübertragung geschaffen, das bereits bei CD-Spielern zum Einsatz kommt und dem Anwender einen einzelnen Datenkanal zur freien Verfügung stellt, der beispielsweise zur Übertragung von Steuerdaten benutzt werden kann. Daß nur ein einziger Datenkanal zur Verfügung steht, zeigt, daß das genannte Format eigentlich nicht zur Verwendung in einem Bussystem gedacht ist. Das erfindungsgemäße Bussystem kommt wegen des zeitlichen Multiplexierens auf der Busleitung mit einem Kanal aus. Es ist im übrigen leicht möglich, das erfindungsgemäße Bussystem mit einer eigenen Norm zu betreiben; die Anwendung eines internationalen Protokolls erleichtert aber die Kommunikation mit Teilnehmern wie CD-Geräten, die dieses Protokoll verwenden.

Die übrigen Unteransprüche betreffen vorteilhafte Weiterbildungen der Erfindung.

Die Erfindung ist nicht nur in Automobilen, sondern wegen des geringen Gewichts der Übertragungsleitungen besonders auch in Luft- und Raumfahrzeugen vorteilhaft einsetzbar. Außerdem können auch stationäre Video-, Audio-, Telefon- und EDV-Anlagen mittels des erfindungsgemäßen Bussystems vernetzt werden, um die Fülle bisher erforderlicher Leitungsverbindungen zu reduzieren.

Weitere Merkmale und Vorteile der Erfindung ergeben sich aus der folgenden Beschreibung mehrerer Ausführungsformen und aus der Zeichnung, auf die Bezug genommen wird.
- Fig. 1: zeigt schematisch ein System von Geräten, bei dem das Verfahren angewandt wird,
- Fig. 2: dient zur Erläuterung des bei dem Verfahren verwandten Übertragungsformats,
- Fig. 3: veranschaulicht den Verfahrensschritt des Multiplexierens,
- Fig. 4: zeigt eine Datenfolge in einem Steuerdaten-Kanal,
- Fig. 5: zeigt schematisch, wie eine der in Fig. 1 gezeigten Schnittstellen zur Umschaltung auf verschiedene Audioquellen eingerichtet ist, und
- Fig. 6: dient zur Erläuterung des Aufbaus und der Funktion einer Schnittstelle zwischen LichtwellenleiterAbschnitten und einem System-Gerät.

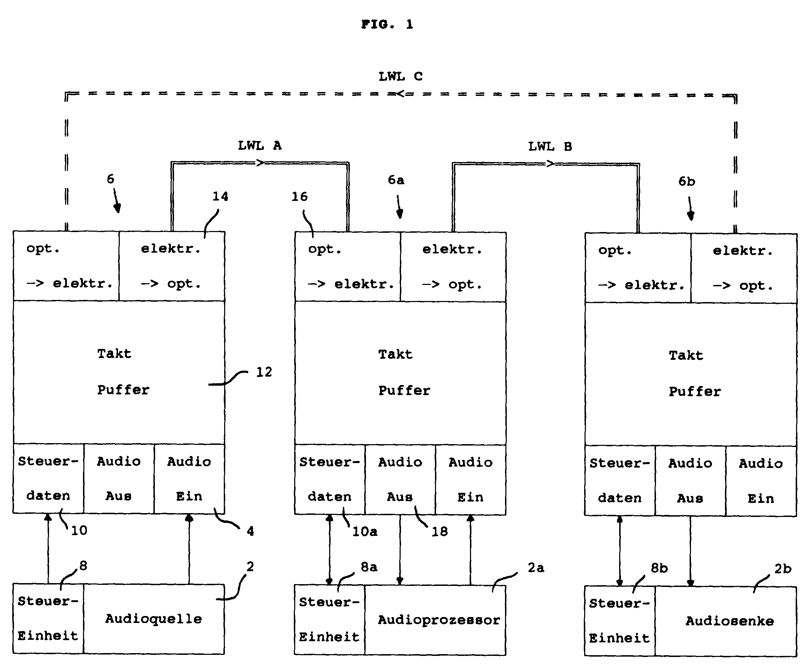

Bei der in Fig. 1 gezeigten Ausführungsform gibt eine Audioquelle 2 wie beispielsweise ein Radioempfänger sein Audiosignal an eine Eingangs schaltung 4 einer Schnittstelle 6 . Die Eingangsschaltung 4 kann beispielsweise eine der bekannten Schaltungen I2S, Sony-Bus oder MSB-LSB-First mit einstellbarer Formatlänge sein. Die Audioquelle 2 ist ferner mit einer Steuereinheit 8 verbunden, die bestimmte Steuersignale abgibt, beispielsweise Steuersignale, die bestimmen, welche von mehreren Lautsprechern angesteuert werden sollen. Diese Steuersignale werden über ein geeignetes paralleles oder serielles Interface 10 der Schnittstelle 6 in diese eingespeist und dort zusammen mit den Audiodaten in ein gemeinsames serielles Datenformat umgesetzt, das weiter unten noch näher beschrieben wird und einen Datenkanal für die Steuersignale aufweist. Wenn keine derartigen Steuersignale an der Schnittstelle 6 anstehen, weil beispielsweise der Radioempfänger keine derartigen Optionen aufweist, werden die die Steuersignale repräsentierenden Bit auf Null gesetzt. Der Takt der Daten wird durch den Takt der Audiodaten aus der Audioquelle 2 bestimmt, wenn diese im geeigneten Datenformat sendet, oder durch eine zu der Schnittstelle gehörende Einrichtung 12, die einen Taktgeber sowie Datenpuffer enthält. Der Datentakt beträgt beispielsweise 32.0, 44.1 oder 48.0 kHz. Dem entsprechen Übertragungsraten von 2.0, 2.8 oder 3.0 Mbaud.

Die gemeinsame Datenfolge aus Audio- und Steuerdaten wird durch einen elektro-optischen Wandler 14 in ein synchrones Lichtsignal umgesetzt und in einen Lichtwellenleiter-Abschnitt LWL A eingespeist. Diese Ausführungsform ist für ein verhältnismäßig kompaktes System gedacht, so daß preiswerte Kunststoff-Lichtwellenleiter und Wandler einfachster Bauart zum Einsatz kommen können. Lichtwellenleiter aus Kunststoff können auch mit sehr kleinen Krümmungsradien verlegt werden, was für die Verhältnisse beispielsweise im Automobil sehr vorteilhaft ist. Der Lichtwellenleiter-Abschnitt LWL A endet bei einem opto-elektrischen Wandler 16 einer zweiten, identisch aufgebauten Schnittstelle 6a, die mit einem Audioprozessor 2a in Verbindung steht, der beispielsweise ein Vielkanal-Klangeinsteller sein kann. Die Audiodaten werden dem Audioprozessor 2a über eine geeignete Ausgangsschaltung 18 zur Verfügung gestellt, dort ggf. verändert und wieder in die Schnittstelle 6a zurückgeführt. Bei diesem Ausführungsbeispiel gehört zu dem Audioprozessor 2a eine Steuereinheit 8a, die auf in der Datenfolge enthaltene und über ein geeignetes Interface 10a ausgegebene Steuerdaten reagieren kann bzw. selbst Steuerdaten abgeben kann.

Die ggf. veränderten Daten werden wie bei der ersten Schnittstelle 6 in einen zweiten Lichtwellenleiter-Abschnitt LWL B eingespeist und gelangen monodirektional zu einer dritten, ebenfalls wie die erste Schnittstelle 6 aufgebauten Schnittstelle 6b, über die sie eine Audiosenke 2b wie beispielsweise eine Verstärker-Lautsprecher-Kombination ansteuern, über die die Audiosignale akustisch wiedergegeben werden sollen. Die Audiosenke 2b verfügt über eine Steuereinheit 8b, die Daten aus dem Steuerdaten-Kanal empfängt.

Alle Schnittstellen 6, 6a und 6b sind identisch aufgebaut, um ihre Herstellung zu rationalisieren; es kommen aber nicht immer sämtliche ihrer Elemente zum Einsatz.

Es ist denkbar, daß auch die zu der Audiosenke 2b gehörende Steuereinheit 8b Steuerdaten abgibt, um z.B. bei Ausfall eines Lautsprechers den Klangeinsteller zu Korrekturen zu veranlassen. Nicht nur in diesem Fall ist es sinnvoll, die dritte Schnittstelle 6b über einen dritten Lichtwellenleiter-Abschnitt LWL C wieder mit der ersten Schnittstelle 6 zu verbinden, wie in Fig. 1 gestrichelt angedeutet.

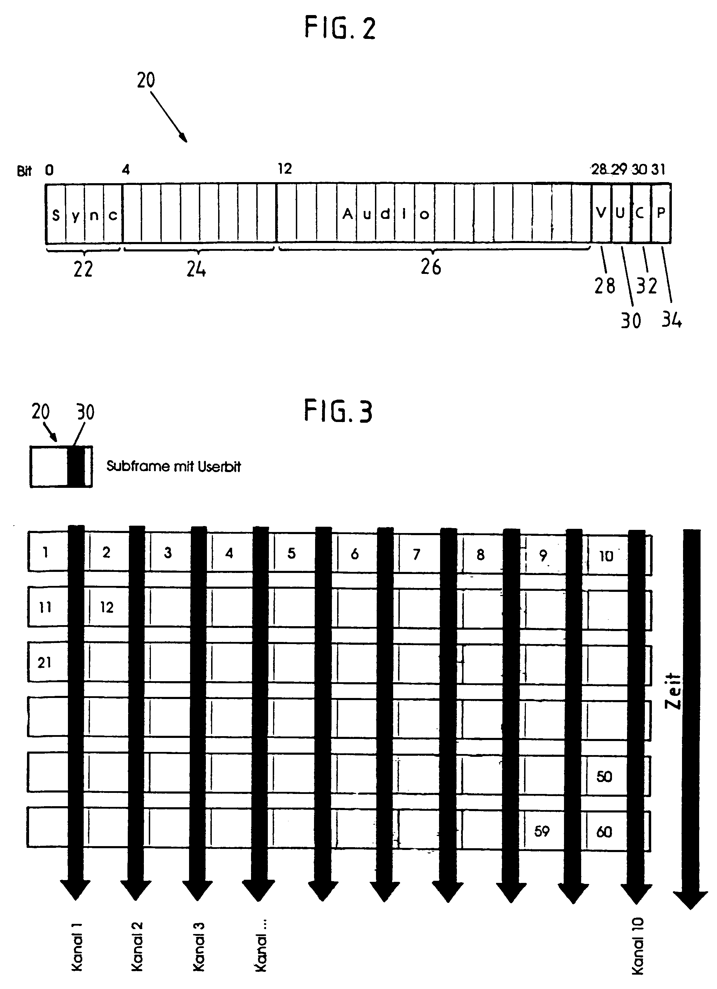

Fig. 2 zeigt die kleinste Einheit 20 des wegen der angestrebten größtmöglichen Kompatibilität vorzugsweise benutzten Datenformats gemäß des AES-EBU Protokolls für Audioübertragung im Konsumerbereich und professionellen Studiobereich, AES3-1985 (ANSI S4.40-1985, Standards and Information Dokuments, Audio Engineering Society, Inc., New York 1985). Diese Einheit 20 wird Subframe genannt und enthält 32 Bit. Eine erste Gruppe 22 von 4 Bit in der Einheit 20 dient zur Synchronisation und zur Unterscheidung zwischen dem linken und dem rechten Stereokanal. Eine zeitlich darauf folgende zweite Gruppe 24 von 8 Bit steht für Audiodaten zur Verfügung, wird aber gegenwärtig noch kaum genutzt. Es folgt eine dritte Gruppe 26 von 16 Bit für Audiodaten, die bereits genutzt wird. Den Abschluß einer Einheit 20 bildet eine Folge von einzelnen Bit 28, 30, 32 und 34, von denen das Bit 30 Userbit genannt wird und von dem Anwender beliebig belegt werden kann, ohne die Audioübertragung zu beeinflussen. Was die Bedeutung der Bit 28, 32 und 34 angeht, wird auf das genannte AES-EBU Protokoll verwiesen. Jedem Stereokanal ist ein Subframe 20 zugeordnet, von denen je zwei aufeinander folgen und einen sogenannten Frame bilden. 192 Frames bilden einen sogenannten Block.

Auf dem Userbit 30 wird ein serieller Datenkanal eröffnet, der in einem Zeitmultiplex-Verfahren in beliebig viele sogenannte Subkanäle unterteilt wird. Fig. 3 zeigt beispielsweise eine Unterteilung in 10 Subkanäle. Jedes 1., 11., 21. usw. Bit der in dem durch das Userbit 30 eröffneten Datenkanal enthaltenen Datenfolge wird einem Kanal 1 als Subkanal zugeordnet, jedes 2., 22., 32. usw. Bit einem Kanal 2 usw.. Jedes Gerät sendet auf einem Kanal. Bei einer Gesamtübertragungsrate von 2 Mbaud ergibt sich bei der Länge von 32 Bit eines Subframe 20 eine Übertragungsrate für die Steuerdaten von 64 kbaud. Bei einer bevorzugten Ausführungsform sind 8 Subkanäle vorhanden, für deren jeden also 8 kbaud Übertragungskapazität verbleiben. Bei dieser Kapazität können auch komplexe Informationen übertragen werden.

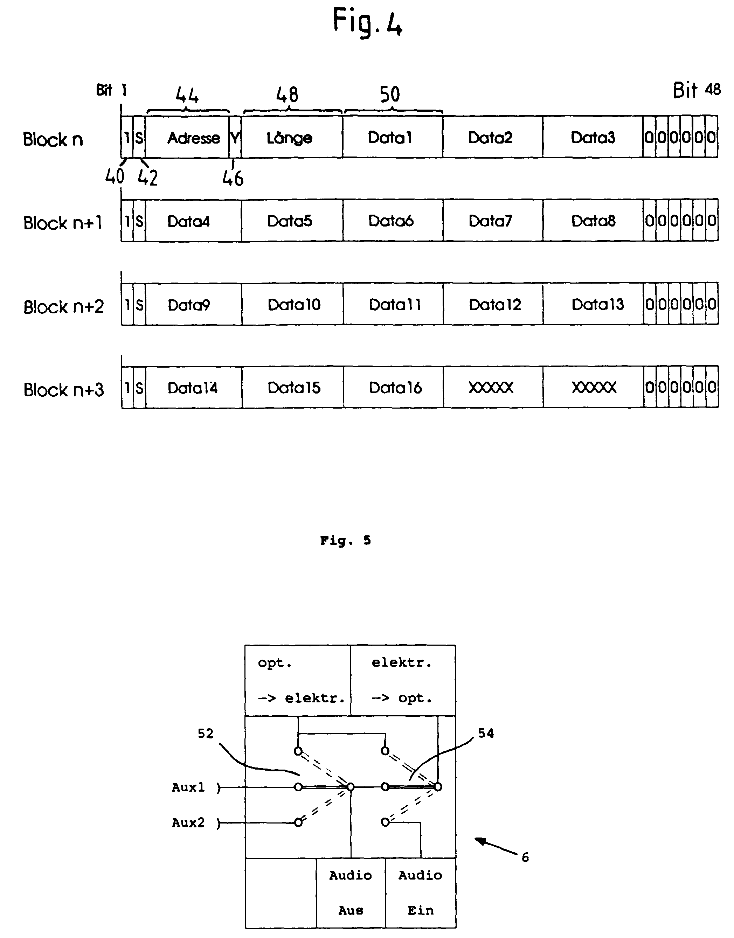

Fig. 4 zeigt eine spezielle Datenfolge in einem von 8 Userkanälen über vier Blöcke n, n+1, n+2 und n+3, die jeweils 48 Bit lang sind (384 Subframes / 8 Subkanäle). Jeder Block beginnt mit einem Bit 40, das als logische Eins gesetzt ist, um den Beginn der Datensequenz zu markieren. Es folgt ein sogenanntes Startbit 42. Das Startbit 42 ist gleich einer logischen Eins, wenn das zu übertragende Datentelegramm beginnt, und gleich einer logischen Null , wenn es mit dem nächsten Block fortgesetzt wird. Dem Startbit 42 folgt eine 7 Bit lange Adresse 44, wobei jedem Teilnehmer eine bestimmte Adresse zugeordnet ist. Der Adresse 44 folgt ein Bit 46, das der Empfänger einer Datensequenz verändern kann, um den Empfang zu quittieren bzw. dem Sender mitzuteilen, ob der Kanal wieder frei ist, oder ob das Telegramm abgewiesen wurde. Dem Bit 46 schließt sich eine Bitfolge 48 an, die eine codierte Information über die Länge der daran anschließenden eigentlichen Datenfolge enthält. Diese Daten werden in Gruppen 50 übertragen, die in Fig. 4 mit Datal, Data2, usw. bezeichnet sind.

Fig. 5 zeigt schematisch die Ankopplung zweier weiterer Audioquellen Aux1 und Aux2 über eine Schnittstelle 6 an das Bussystem. Die Schnittstelle 6 entspricht in ihrem Aufbau den in Fig. 1 gezeigten Schnittstellen 6, 6a und 6b. Umschalter 52 und 54, die auch elektronisch ausgeführt sein können, erlauben nach Wahl die Einspeisung von Signalen aus den Audioquellen Aux1 und Aux2. In dem Spezialfall, daß die Umschalter 52 und 54 in Fig. 5 beide oben stehen, passieren die Audiosignale des Bussystems die Schnittstelle 6 unverändert.

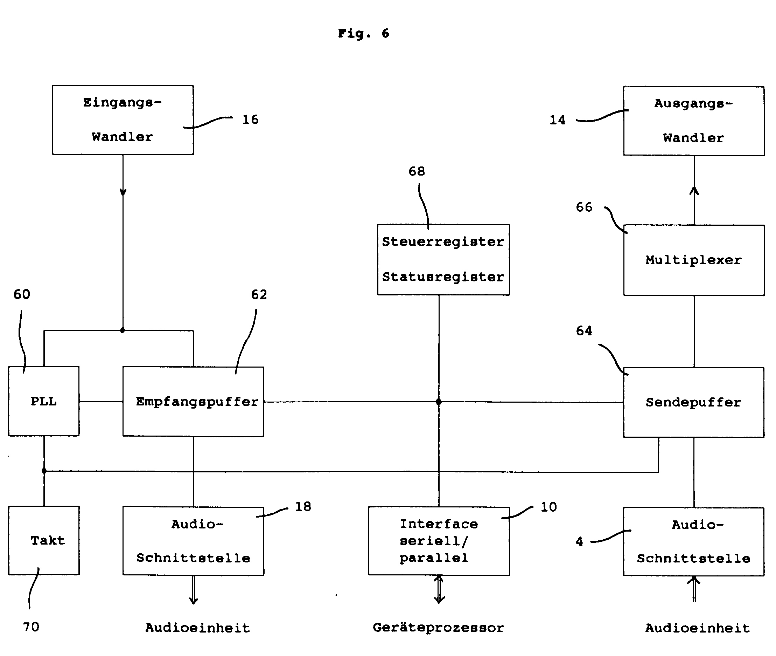

Fig. 6 zeigt als Blockdiagramm die wesentlichsten Teile einer der in Fig. 1 gezeigten Schnittstellen 6, 6a oder 6b. Teile, die im Zusammenhang mit Fig. 1 bereits erläutert wurden, sind mit gleichen Bezugszeichen versehen. Alle Teile bis auf die elektro-optischen Wandler 14 und 16 werden bei der bevorzugten Ausführungsform zwecks Kostensenkung in einer einzigen integrierten Schaltung ausgeführt. Die Wandler 14 und 16 werden hier als Elemente der Schnittstelle betrachtet, können aber in der praktischen Ausführung auch von vornherein mit den Lichtwellenleitern verbunden sein und erst bei der Montage des Systems elektrisch an die übrigen Teile der Schnittstelle angeschlossen werden. Eine Schaltung 60 enthält eine phasenstarre Regelschleife PLL und schwingt sich auf von dem einen Wandler 16 ankommende elektrische Signale ein. Die Schaltung 60 ist auch in der Lage, zu erkennen, wenn eine in den Signalen enthaltene Adresse mit einer der jeweiligen Schnittstelle zugeordneten Adresse übereinstimmt. Ferner gelangt die Datenfolge in einen Empfangspuffer 62. Die Audiodaten werden über eine Ausgangsschaltung 18 in verschiedene Formate umgewandelt, von denen das jeweils passende einer angeschlossenen Audioeinheit übermittelt wird. Steuerdaten gelangen über ein ebenfalls für mehrere Formate ausgelegtes Interface 10 an einen Mikroprozessor des angeschlossenen Geräts und wieder zurück. Zu sendende Steuerdaten gelangen über einen Sendepuffer 64 an eine Multiplexiereinrichtung 66, wobei einerseits das erwähnte Format aufgebaut wird, andererseits die Steuerdaten in den zeitrichtigen Multiplexkanal eingelesen werden. Aus der angeschlossenen Audioeinheit über eine Eingangsschaltung 4 ankommende Audiodaten oder aber Audiodaten aus dem Empfangspuffer 62 werden ebenfalls in das Format mit eingebaut und die komplette Datenfolge einem Wandler 14 zugeführt, der die elektrischen Signale wieder in optische Signale umwandelt. Die Datenverwaltung obliegt einem mit dem Empfangspuffer 62, dem Sendepuffer 64 und dem Interface 10 verknüpften Steuer- und Statusregister 68. Wenn eine in den Daten enthaltene Adresse nicht mit der Geräteadresse übereinstimmt, werden die Daten unverändert weitergeleitet. Aufgrund der Zwischenspeicherung findet ein gewisser Zeitversatz statt. Dieser Zeitversatz erfolgt aber so, daß die Daten wieder in ihren richtigen Kanal einsortiert werden. Die Informationen über den Takt erhält der Sendepuffer 64 von einer Takteinrichtung 70, die den Takt entweder von der PLL-Schaltung 60 erhält oder von einem gesonderten Taktgenerator. Dieser Taktgenerator braucht aber nicht Bestandteil der Schnittstelle zu sein, da gängige Audioquellen wie CD-Spieler im allgemeinen einen solchen Taktgenerator enthalten, und ist daher nicht mit eingezeichnet.

Gemäß Fig. 1 lassen sich bezüglich der Audioübertragung drei grundsätzliche Betriebsweisen unterscheiden. Die Betriebsweise der in der Figur linken Schnittstelle 6 ist eine aktive Betriebsweise, in der das erwähnte Datenformat erst erzeugt wird, und zwar entweder auf dem Takt der aus der Audioquelle 2 stammenden Daten oder auf dem Takt eines gesonderten Taktgenerators aufbauend. Es arbeitet immer nur eine Schnittstelle eines Systems in diesem sogenannten Masterbetrieb. Die beiden anderen Schnittstellen 6a und 6b erzeugen keinen eigenen Takt, sondern passen sich mit ihrer PLL-Schaltung dem vorgegebenen Takt an. Diese Betriebsweise wird Slave-Betrieb genannt. Die in der Figur mittlere Schnittstelle 6a weist die Besonderheit auf, daß Audiodaten empfangen und bedarfsweise verändert werden können. In diesem Fall spricht man von Slave/Prozessor-Betrieb. Die in der Figur rechte Schnittstelle 6b verhält sich bezüglich der Audiodaten rein passiv, indem diese nur weitergeleitet werden.

Wesentlich für die Erfindung ist, daß die Datenübertragung über die Lichtwellenleiter nur in einer Richtung erfolgt. Nur ein Gerät arbeitet im Masterbetrieb und gibt damit den Takt vor. In Verbindung mit dem Umstand, daß jedes Gerät einen eigenen Sendekanal benutzt und eine Busarbitrierung nicht erforderlich ist, wird es möglich, eine große Zahl von Geräten ohne Übertragungskonflikte zu einem Netzwerk mit großem Datendurchsatz zusammenzuschließen. Auf allen Steuerdaten-Kanälen kann zeitgleich gesendet werde, weshalb jeder Steuerdaten-Kanal eine mittlere Datenübertragungsrate besitzt, die jederzeit zur Verfügung steht. Die Kosten zur Realisierung des Systems sind verglichen mit herkömmlichen Bussystemen vergleichbarer Leistung außerordentlich gering. Da das erste und das letzte Gerät wieder miteinander verknüpft werden, entsteht ein geschlossener Ring, über den ein Telegramm solange umlaufen kann, bis es sein Empfänger abnimmt. Der Sender eines Telegramms kann erfahren, ob sein Telegramm beim Empfänger angekommen ist. Hierzu dient das im Zusammenhang mit Fig. 4 bereits erwähnte Bit 46, das der Empfänger einer Nachricht verändert oder entfernt, um den Empfang zu quittieren.

Bei einer besonderen Ausführungsform werden die Audiodaten bereits innerhalb der Schnittstelle umgeleitet und direkt wieder gesendet, wenn nämlich das angeschlossene Gerät gar keine Audioeinheit aufweist und nur Steuer- bzw. Überwachungsfunktionen ausführt. Beispielsweise sind die verschiedenartigsten Sensoren denkbar, die in einem Fahrzeug zum Einsatz kommen können. Diese Sensoren können bei einer Ausführungsform der Erfindung im Rahmen einer Fahrzeugdiagnose abgefragt werden. Hierzu ist ein besonderer Diagnose-Hilfskanal mittes eines transparenten Bit vorgesehen, das nicht manipuliert wird und die Gerätereihe unverändert durchwandert.

## Patentansprüche

1. Verfahren zur gemeinsamen Übertragung von digitalen Audio- und Steuerdaten auf einer gemeinsamen Busleitung in einem System von Geräten, zu denen wenigstens eine digitale Audio-Signalquelle (2) und wenigstens eine digitale Steuerdaten-Signalquelle gehören;
dadurch gekennzeichnet, daß:
die Busleitung aus einer zu einem Ring geschlossenen Reihenschaltung von Lichtwellenleiter-Abschnitten (LWL A, LWL B, LWL C) und Schnittstellen (6, 6a, 6b) aufgebaut wird, die jeweils zwei Lichtwellenleiter-Abschnitte verbinden, indem sie die aus dem einen Lichtwellenleiter-Abschnitt ankommenden Signale in elektrische Signale umsetzen und diese unverändert oder in verarbeiteter Form in optische Signale umsetzen und in den anderen Lichtwellenleiter-Abschnitt einspeisen;
die Audio- und Steuerdaten in einem Format übertragen werden, das eine getaktete Folge von einzelnen Bitgruppen gleicher Größe vorschreibt, worin die Audio-Daten jeweils eine vorbestimmte Anzahl von Bits einnehmen und für die Steuerdaten wenigstens ein Bit reserviert ist;
der Takt der Daten durch den Takt der Audio-Daten jeweils einer einzigen Audio-Signalquelle (2) bestimmt wird;
jedes Gerät über eine zugeordnete Schnittstelle (6, 6a, 6b) an die Busleitung angeschlossen wird;
zumindest einigen der Geräte eine Adresse zugeordnet wird;
jedes Gerät, dem eine Adresse zugeordnet ist, über seine Schnittstelle fortwährend die Steuerdaten abfragt, um auf übertragene Steuerdaten anzusprechen, wenn die ihnen vorausgehende Adresse mit seiner eigenen Adresse übereinstimmt; und
die Daten jeweils monodirektional über einen Lichtwellenleiter-Abschnitt von einer Schnittstelle zur nächsten übertragen werden.

2. Verfahren nach Anspruch 1, dadurch gekennzeichnet, daß ein Gerät beim Empfang von an ihn adressierten Steuerdaten jeweils ein bestimmtes Bit in der Folge von Steuerdaten verändert oder entfernt und daß das die Steuerdaten aussendende Gerät die über die geschlossene Busleitung zu ihm zurückgelangenden Steuerdaten auf darin erfolgte Veränderungen überwacht.

3. Verfahren nach einem der vorstehenden Ansprüche, dadurch gekennzeichnet, daß in jeder Folge von Steuerdaten jeweils auch eine codierte Information über ihre Länge gesendet wird.

4. Verfahren nach einem der vorstehenden Ansprüche, dadurch gekennzeichnet, daß das Übertragungsformat der Norm AES3-1985 entspricht, wonach jede Bitgruppe 32 Bit umfaßt, von denen 24 Bit für die Audiodaten, 1 Bit für die Bildung von Steuerdaten-Kanälen und die übrigen Bits für Kontroll- und Synchronisationsfunktionen verwendet werden.

5. Verfahren nach einem der vorstehenden Ansprüche, dadurch gekennzeichnet, daß jeweils das als Quelle der Audio-Daten arbeitende Gerät im Masterbetrieb arbeitet und alle anderen Geräte als potentielle Empfänger der Audio-Daten im Slave-Betrieb arbeiten.

6. Verfahren nach Anspruch 5, dadurch gekennzeichnet, daß die im Slave-Betrieb arbeitenden Geräte ihren Takt mittels einer phasenstarren Regelschleife aus dem Takt des als Master arbeitenden Geräts ableiten.

7. Verfahren nach Anspruch 5 oder 6, dadurch gekennzeichnet, daß wenigstens eines der Geräte, die im Slave-Betrieb arbeiten, die empfangenen Audio-Daten einer bedarfsweisen Verarbeitung unterzieht.

8. Verfahren nach einem der vorstehenden Ansprüche, dadurch gekennzeichnet, daß für die Steuerdaten in jeder Bitgruppe wenigstens ein Bit reserviert ist und durch zeitliches Multiplexen auf der Busleitung mehrere Steuerdaten-Kanäle mittels des reservierten Bits gebildet werden, wobei jedes Gerät zum Senden von Steuerdaten einen ihm zugeordneten Steuerdaten-Kanal benutzt.

9. Bussystem mit einer Busleitung in einem System von Geräten, zu denen wenigstens eine digitale Audio-Signalquelle und wenigstens eine digitale Steuerdaten-Signalquelle gehören, zur gemeinsamen Übertragung von digitalen Audio- und Steuerdaten auf dieser Busleitung;
dadurch gekennzeichnet, daß jedem Gerät eine standardisierte Schnittstelle gleicher Art zugeordnet ist, daß die Busleitung aus einer zu einem Ring geschlossenen Reihenschaltung von Lichtwellenleiter-Abschnitten (LWL A, LWL B, LWL C) und Schnittstellen aufgebaut ist, die jeweils zwei Lichtwellenleiter-Abschnitte verbinden, daß jede Schnittstelle einen Eingang und einen Ausgang zum Anschluß je eines Lichtwellenleiter-Endes aufweist, daß die Schnittstellen durch Verbinden je eines Ausgangs einer Schnittstelle mit einem Eingang einer anderen Schnittstelle in Reihe geschaltet sind, daß in jeder Schnittstelle zwischen Eingang und Ausgang Einrichtungen (16) zur Umsetzung von optischen in elektrische Signale, Einrichtungen (62, 64) zur Zwischenspeicherung von empfangenen Daten und Einrichtungen (14) zur Umsetzung von elektrischen in optische Signale vorhanden sind und daß der Takt der Daten auf der Busleitung durch den Takt der Audio-Daten jeweils nur einer Audio-Signalquelle (2) bestimmt wird, wobei die monodirektional übertragenen Audio- und Steuerdaten ein Format aufweisen, das eine getaktete Folge von einzelnen Bitgruppen gleicher Größe vorschreibt, worin die Audio-Daten jeweils eine vorbestimmte Anzahl von Bits einnehmen und für die Steuerdaten wenigstens ein Bit reserviert ist.

10. Bussystem nach Anspruch 9, gekennzeichnet durch seine Verwendung in einem Netzwerk, zu dessen Geräten wenigstens zwei der folgenden gehören:
Radio-Empfänger, Cassettenrekorder, CD-Spieler, Verstärker-Lautsprecherkombinationen, Soundprozessoren, Telefonkomponenten, Sensoren zur Meßwerterfassung, Aktuatoren zur Ausführung von über die Lichtwellenleiter-Abschnitte übertragenen Befehlen, Einrichtungen zur Datenerfassung, Datenspeicherung, Datenverarbeitung und Analyse von Daten, insbesondere in einem Fahrzeug, wobei eines dieser Geräte die Audio-Signalquelle und eines die Steuerdaten-Signalquelle bildet.

11. Bussystem nach Anspruch 9 oder 10, dadurch gekennzeichnet, daß die Lichtwellenleiter-Abschnitte (LWL A, LWL B, LWL C) aus einem Kunststoff-Lichtwellenleiter gebildet sind.

12. Schnittstelle zur Verwendung in dem Bussystem nach einem der Ansprüche 9 bis 11, dadurch gekennzeichnet, daß sie einen Taktgeber (60, 70) zur Erzeugung des Datentaktes auf der Busleitung enthält, der je nach Betriebsart des an die Schnittstelle angeschlossenen Geräts - Master oder Slave - den Takt selbständig erzeugt oder mittels einer phasenstarren Regelschleife aus den von einem im MasterBetrieb arbeitenden Teilnehmer herkommenden Signalen ableitet.

13. Schnittstelle nach Anspruch 12, dadurch gekennzeichnet, daß sie mindestens zwischen folgenden Betriebsarten umschaltbar ist:
a) Master-Betrieb, bei welchem Audio-Daten aus einem an die Schnittstelle angeschlossenen Gerät in den an ihren Ausgang angeschlossenen Lichtwellenleiter-Abschnitt eingespeist werden;
b) Slave-Betrieb, bei welchem die aus einem Lichtwellenleiter-Abschnitt ankommenden Audio-Daten unverändert in den anderen Lichtwellenleiter-Abschnitt übergeben und bei Bedarf an das an die Schnittstelle angeschlossene Gerät weitergeleitet werden;
c) Slave/Prozessor-Betrieb, bei welchem die aus dem einen Lichtwellenleiter-Abschnitt ankommenden Audio-Daten durch das Gerät verändert und gegebenenfalls zeitversetzt, aber synchron zur Datentaktfolge in den anderen Lichtwellenleiter eingespeist werden.

14. Schnittstelle nach Anspruch 12 oder 13, dadurch gekennzeichnet, daß sie mehrere Eingänge (4) für als Audioquellen arbeitende Geräte sowie eine Umschalteinrichtung zur Umschaltung zwischen den Eingängen aufweist.

15. Schnittstelle nach einem der Ansprüche 12 bis 14, dadurch gekennzeichnet, daß die Ein/Ausgabeschaltungen (10) unterschiedliche Standards für die Steuerdaten von und zu einem Gerät verarbeiten können.

## Claims

1. A method of common transfer of digital audio and control data on a common bus line in a system of devices to which at least one digital audio signal source (2) and at least one digital control data signal source belong;
characterized in that:
said bus line is configured as a series circuit of fiber optic cable sections (LWL A, LWL B, LWL C) and interfaces (6, 6a, 6b) each of which connects two fiber optic cable sections by converting the signals arriving from a fiber optic cable section into electrical signals and converting these unchanged or processed into optical signals and feeding these into the other fiber optic cable section;
the audio and control data is transferred in a format specifying a clocked sequence of discrete groups of bits of equal magnitude, each of said audio data requiring a predetermined number of bits and at least one bit being reserved for the control data;
the clock of data is determined by the clock of audio data from a single audio data signal source (2);
each device is connected to the bus line via an assigned interface (6, 6a, 6b);
an address is assigned to at least some of the devices, and each device having an assigned address continously interrogates the control data via its interface to respond to transferred control data when the address in advance of said control data corresponds with its own address; and
the data is transferred monodirectionally over a fiber optic cable section from one interface to the next.

2. A method according to claim 1, characterized in that a device modifies or removes a determined bit in the sequence of control data every time this device receives control data addressed to it, and the device outputting the control data monitors the control data returned to it via the closed bus line for changes therein.

3. A method according to any one of the previous claims, characterized in that a coded information as to its length is also transmitted in each sequence of control data.

4. A method according to any one of the previous claims, characterized in that the transfer format corresponds to standard AES3-1985 requiring each bit group to comprise 32 bits of which 24 bits are employed for the audio data, 1 bit for forming the control data channels and the remaining bits for the checking and synchronizing functions.

5. A method according to any one of the previous claims, characterized in that the device operating as the source of audio data operates in a master mode while all other devices operate in a slave mode as potential receivers.

6. A method according to claim 5, characterized in that said devices operating in the slave mode derive their clock by means of a phase-locked loop from the clock of the device operating in master mode.

7. A method according to claim 5 or 6, characterized in that at least one of said devices operating in the slave mode subjects the received audio data to processing as required.

8. A method according to any one of the previous claims, charcterized in that at least one bit is reserved for the control data in each bit group and that by means of time multiplexing several control data channels are formed on the bus line by means of the reserved bit, each device employing an assigned control data channel for transmitting control data.

9. A bus system having a bus line in a system of devices, which contains at least one digital audio signal source and at least one digital control data signal source, for common transmission of digital audio data and control data on said bus line;
characterized in that each device is assigned a standardized interface of the same kind, the bus line is configured as a series circuit of fiber optic cable sections (LWL A, LWL B, LWL C) and interfaces, each of which connects two fiber optic cable sections, each interface has an input and an output for connecting one end of each fiber optic cable, the interfaces are connected in series by connecting one output of each interface to one input of another interface and each interface is provided between its input and its output with means (16) for converting optical signals into electrical signals, means (62, 64) for buffering received data and means (14) for converting electrical signals into optical signals, that the clock of data is determined by the clock of audio data from a single audio data signal source (2), the monodirectionally transmitted audio and control data having a format specifying a clocked sequence of discrete groups of bits of equal magnitude in which each audio data requires a predetermined number of bits and at least one bit is reserved for the control data.

10. A bus system according to claim 9, characterized by its use in a network, which involves at least two of the following devices:
radio receivers, cassette recorders, CD players, amplifier/ speaker combinations, sound processors, telephone components, measurement value sensors, actuators for implementing commands transferred via the fiber optic cable sections, means for data acquisition, data storage, data processing and data analysis, particularly in a vehicle, wherein one of the devices constitutes the audio data signal source and one constitutes the control data signal source.

11. A bus system according to claim 9 or 10, characterized in that said fiber optic cable sections (LWL A, LWL B, LWL C) are formed by plastic fiber optic cables.

12. An interface for employment in the bussystem according to any of the claims 9 to 11, characterized in that it contains a clock generator (60, 70) for producing the data clock on the bus line, which generates, depending on the operating mode of the device connected to the interface - master or slave - the clock automatically or derives it by means of a phase-locked loop from the signals arriving from a user operating in the master mode.

13. An interface according to claim 12, characterized in that it can be switched to operate in at least the following modes:
a) Master mode in which audio data from a device connected to said interface is fed to the fiber optic cable section connected to its output;
b) Slave mode in which the audio data arriving from a fiber optic cable section is passed on unmodified to the other fiber optic cable section and, where required, to the device connected to said interface;
c) Slave/processor mode in which the audio data arriving from a fiber optic cable section is modified by the device and fed to the other fiber optic cable shifted in time, where necessary, but in synchronism with the data clock sequence.

14. An interface according to claim 12 or 13, characterized in that it has a plurality of inputs (4) for devices operating as audio sources and switching means for selecting among the inputs.

15. An interface according to any one of claims 12 through 14, characterized in that the input/output circuits (10) can process differing standards for the control data from and to a device.

## Revendications

1. Procédé pour la transmission commune de données numériques audio et de commande, par un bus commun dans un système d'appareils dont font partie au moins une source de signaux numériques audio (2) et au moins une source de signaux de données numériques de commande, caractérisé en ce que le bus est composé d'un montage. en série, fermé en une boucle, de tronçons de fibre optique (LWL A, LWL B, LWL C) et d'interfaces (6, 6a, 6b) qui relient chacune deux tronçons de fibre optique, en convertissant les signaux arrivant d'un tronçon de fibre optique en signaux électriques et en convertissant ceux-ci, de manière inchangée ou sous forme traitée, en signaux optiques et en les envoyant dans l'autre tronçon de fibre optique ;
les données audio et de commande sont transmises dans un format qui prescrit une suite cyclique de groupes de bits individuels de même grandeur, à l'intérieur desquels les données audio occupent un nombre prédéfini de bits, et au moins un bit est réservé aux données de commande ;
le cycle des données est déterminé par le cycle des données audio respectivement d'une source unique de signaux audio (2) ;
chaque appareil est relié au bus par l'intermédiaire d'une interface associée (6, 6a, 6b) ;
une adresse est affectée à au moins certains des appareils ;
chaque appareil. auquel est affectée une adresse interroge constamment, par l'intermédiaire de son interface, les données de commande, en vue de répondre a des données de commande transmises, lorsque l'adresse qui les précède correspond à sa propre adresse ; et les données sont transmises respectivement de façon unidirectionnelle par un tronçon de fibre optique d'une interface vers la suivante.

2. Procédé selon la revendication 1, caractérisé en ce qu'un appareil, lors de la réception de données de commande qui lui sont adressées, modifie ou élimine un bit déterminé dans la suite de données de commande, et en ce que l'appareil émettant les données de commande contrôle, sur le plan des modifications qu'elles ont subies, les données de commande qui lui parviennent en retour par l'intermédiaire du bus fermé.

3. Procédé selon l'une quelconque des revendications précédentes, caractérisé en ce que dans chaque suite de données de commande, est également émise une information codée correspondante concernant sa longueur.

4. Procédé selon l'une quelconque des revendications précédentes, caractérisé en ce que le format de transmission répond à la norme AES3-1985, selon laquelle chaque groupe de bit comprend 32 bits, dont 24 bits sont affectés aux données audio, 1 bit à la formation des canaux de données de commande et les bits restant aux fonctions de contrôle et de synchronisation.

5. Procédé selon l'une quelconque des revendications précédentes, caractérisé en ce qu'à chaque fois, l'appareil travaillant en tant que source des données audio fonctionne en mode maître et que les autres appareils, travaillant en tant que récepteurs potentiels des données audio, fonctionnent en mode esclave.

6. Procédé selon la revendication 5, caractérisé en ce que les appareils fonctionnant en mode esclave dérivent leur cycle au moyen d'une boucle de régulation fixe en phase du cycle de l'appareil fonctionnant en mode maître.

7. Procédé selon la revendication 5 ou 6, caractérisé en ce qu'au moins l'un des appareils fonctionnant en mode esclave soumet les données audio reçues à un traitement en fonction des besoins.

8. Procédé selon l'une quelconque des revendications précédentes, caractérisé en ce qu'au moins un bit est réservé aux données de commande dans chaque groupe de bits et que plusieurs canaux de données de commande sont formés au moyen du bit réservé par un multiplexage dans le temps sur le bus, chaque appareil utilisant pour l'envoi de données de commande un canal de données de commande qui lui est attribué.

9. Système de bus comprenant un bus dans un système d'appareils, dont fait partie au moins une source de signaux numériques audio et au moins une source de signaux de données numériques de commande, pour la transmission commune de données numériques audio et de commande sur ce bus; caractérisé en ce qu'à chaque appareil est affectée une interface standard du même type, en ce que le bus est composé d'un montage en série fermé en une boucle, de tronçons de fibre optique (LWL A, LWL B, LWL C) et d'interfaces reliant chacune deux tronçons de fibre optique, en ce que chaque interface comporte une entrée et une sortie, chacune pour le raccordement d'une extrémité de fibre optique, en ce que les interfaces sont montées en série grâce à la liaison entre la.sortie de chaque interface et l'entrée d'une autre interface, en ce que dans chaque interface sont prévus des dispositifs (16) pour la conversion de signaux optiques en signaux électriques, des dispositifs (62, 64) pour la mémorisation intermédiaire de données reçues, et des dispositifs (14) pour la conversion de signaux électriques en signaux optiques, et en ce que le cycle des données sur le bus est déterminé par le cycle des données audio respectivement d'une seule source de signaux audio (2), les données audio et de commandes transmises de façon unidirectionnelle présentant un format qui prescrit une suite cyclique de groupes de bits individuels de même grandeur, à l'intérieur desquels les données audio occupent un nombre prédéfini de bits et au moins un bit est réservé aux données de commande.

10. Système de bus selon la revendication 9, caractérisé par son utilisation dans un réseau dont les appareils comprennent au moins deux des dispositifs suivants : récepteur radio, lecteur de cassettes, lecteur de disques compacts, ensembles amplificateur/haut-parleurs, dispositifs de traitement du son, composants téléphoniques, détecteurs de saisie de mesures, éléments d'actionnement pour exécuter des ordres transmis par l'intermédiaire des tronçons de fibre optique, dispositifs pour la saisie de données, la mémorisation de données, le traitement de données et l'analyse de données, notamment dans un véhicule, l'un de ces appareils formant la source des signaux audio et un autre la source des signaux de données de commande.

11. Système de bus selqn la revendication 9 ou 10, caractérisé en ce que les tronçons de fibre optique (LWL A, LWL B, LWL C) sont réalisés en une fibre optique en matière plastique.

12. Interface destinée à être utilisée dans le système de bus selon l'une quelconque des revendications 9 à 11, caractérisé en ce qu'elle comprend une horloge (60, 70) pour produire le cycle de données sur le bus qui, suivant le mode de fonctionnement, maître ou esclave, de l'appareil relié à l'interface, génère elle même le cycle, ou le dérive, au moyen d'une boucle de régulation fixe en phase, des signaux en provenance d'un terminal abonné fonctionnant en mode maître.

13. Interface selon la revendication 12, caractérisé en ce qu'elle peut être commutée au moins entre les modes de fonctionnement suivants :
a) mode maître, dans lequel les données audio d'un appareil relié à l'interface, sont envoyées au tronçon de fibre optique relié à la sortie de cette interface ;
b) mode esclave, dans lequel les données audio arrivant en provenance d'un tronçon de fibre optique peuvent être transmises de manière inchangée dans l'autre tronçon de fibre optique, et au besoin peuvent être transmises à l'appareil relié à l'interface ;
c) mode esclave/traitement, dans lequel les données audio arrivant en provenance d'un tronçon de fibre optique peuvent être modifiées par l'appareil et peuvent être envoyées dans l'autre fibre optique, le cas échéant, de manière décalée dans le temps, mais de façon synchronisée avec la suite cyclique de données.

14. Interface selon la revendication 12 ou 13, caractérisé en ce qu'elle comporte plusieurs entrées (4) pour des appareils fonctionnant en tant que sources audio, ainsi qu'un dispositif de commutation pour réaliser la commutation entre les entrées.

15. Interface, selon l'une quelconque des revendications 12 à 14, caractérisée en ce que les circuits d'entrée/sortie peuvent traiter différents standards pour les données de commande d'un ou vers un appareil.
